# EUROPEAN PATENT APPLICATION

(11) **EP 1 912 440 A1**
(43) Date of publication of application: **16.04.2008**
(21) Application number: 07118202.6
(22) Date of filing: 10.10.2007
(51) Int. Cl.: H04N 7/173

(54) **Method, system and apparatus for managing IPTV live broadcast service**

(30) Priority: 10.10.2006 CN 200610159748
(71) Applicant: Huawei Technologies Co., Ltd., Longgang District, Shenzhen Guangdong 518129 (CN)
(72) Inventor: Chen, Yu, Guangdong 518129 (JP)
(74) Representative: Körber, Martin Hans

(57) **Abstract**

A method for managing an IPTV live broadcast service, including: receiving a request from a subscriber terminal; updating authorization information of the subscriber terminal in real time; generating a channel list for the subscriber terminal according to the authorization information; and sending the channel list to the subscriber terminal. A system, IPTV application apparatus and subscriber terminal for managing an IPTV live broadcast service is also provided. By the interaction between the IPTV application apparatus and the subscriber terminal, the embodiments of the present invention make it possible to send authorization information to the subscriber terminal in real time so that the subscriber may employ the live broadcast of a PPV program in real time. In addition, the embodiments of the present invention make it possible to effectively manage the time shift operation performed by the subscriber in the time shift limit.

## Description

### Field of the Invention

The present invention relates to network multimedia technologies, and particularly, to a method, system and apparatus for managing an Internet Protocol TV (IPTV) live broadcast service.

### Background of the Invention

Upon developing of Digital TV (DTV), the Pay Per View (PPV) service in live broadcast programs is an important DTV service. However, as the DTV usually adopts a unidirectional channel, subscribers must order a specified time period of a specified channel through a call center or subscriber management system in advance. In addition, the Conditional Access (CA) management system of the DTV updates Entitle Manage Messages (EMMs) through multicast, which greatly delays the validation of the EMMs. The above two reasons makes the DTV system provide mainly an Order Pay Per View (OPPV) service instead of an Impulse Pay Per View (IPPV) service which has high requirements on interaction and response time and is thus hard to be applied in the DTV system.

An Internet Protocol TV or Interactive Personal TV (IPTV) system solves the problem of real-time interaction between a subscriber terminal and an apparatus on the system side, which makes both the OPPV service and the IPPV service possible in live broadcast programs. A common service in the IPTV system is the Video on Demand (VOD) service.

However, the VoD service is not suitable for PPV programs of live broadcast PPV service in the IPTV system, because every order has to be checked by the IPTV application system for the authorization, which delays the response in the live broadcast PPV service, influences user experiences and greatly increases the cost of the IPTV application system.

A solution to the above-mentioned problem in the related art provides a live broadcast PPV service with a CA management system. However, the solution relies on the CA management system provided by a third party, which increases the system cost, and the differences between different CA management systems in the service process may bring further difficulties to the system implementation.

### Summary of the Invention

Embodiments of the present invention provide a method, system and apparatus for managing an Internet Protocol TV (IPTV) live broadcast service, which enable subscribers to watch PPV programs in real time in an IPTV live broadcast service system.

A method for managing an IPTV live broadcast service includes:
receiving a request from a subscriber terminal;
updating authorization information of the subscriber terminal in real time;
generating a channel list for the subscriber terminal according to the authorization information; and
sending the channel list to the subscriber terminal.

An IPTV application apparatus includes:
a storage unit, capable of storing authorization information of a subscriber terminal; and
a process unit, capable of receiving a request from a subscriber terminal, updating the authorization information of the subscriber terminal in real time, generating a channel list for the subscriber terminal according to the authorization information, and sending the channel list to the subscriber terminal.

A subscriber terminal includes:
a terminal service management unit, capable of sending a request to an Internet Protocol TV (IPTV) application apparatus, obtaining authorization information and a channel list;
wherein the channel list is generated by the IPTV application apparatus according to the authorization information and is updated in real time;
a media playback unit, capable of employing a live broadcast service according to the authorization information received from the terminal service management unit.

A system for managing an IPTV live broadcast service includes:
a subscriber terminal as mentioned above;
an IPTV application apparatus as mentioned above.

It can be concluded that embodiments of the present invention make full use of the bidirectional transmission function of the IP network and the self-control capability of the IPTV subscriber terminal, effectively manages the PPV service through the interaction between the IPTV application apparatus and the IPTV subscriber terminal, and transmitting the authorization information in real time and adding the authorization information into the live broadcast channel list of the IPTV subscriber terminal so as to support real-time live broadcast PPV program at the IPTV subscriber terminal. In addition, by adding the management information of time shift operation into the authorization information, the present invention effectively manages the time shift operation of the IPTV subscriber in the time interval for the time shift operation.

### Brief Description of the Drawings

Figure 1 is a schematic diagram illustrating the structure of a conventional management system for VoD PPV service.
Figure 2 is a schematic diagram illustrating the structure of a conventional management system with a CA system designed for live broadcast PPV service.
Figure 3 is a schematic diagram illustrating a system for managing an IPTV live broadcast service in accordance with an embodiment of the present invention.
Figure 4 is a flow chart illustrating a method for managing an IPTV live broadcast service in accordance with an embodiment of the present invention.
Figure 5 is a flow chart of updating service information by the IPTV application apparatus in accordance with an embodiment of the present invention.
Figure 6 is a flow chart of performing an authorization request from the subscriber terminal by the IPTV application apparatus in accordance with an embodiment of the present invention.
Figure 7 is a flow chart of using a PPV service by the subscriber terminal through an EPG page in accordance with an embodiment of the present invention.
Figure 8 is a flow chart of using a PPV service by the subscriber terminal with a digit button or channel switch button in accordance with an embodiment of the present invention.

### Detailed Description of the Invention

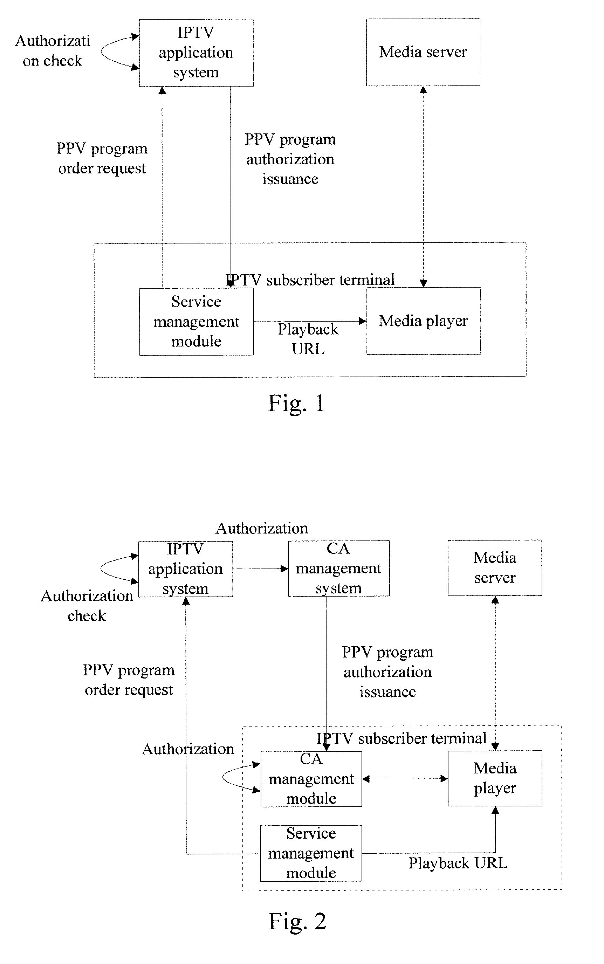

Figure 1 shows the structure of a management system designed for a VOD service. An IPTV subscriber views an Electronic Program Guide (EPG) page to search for and choose programs that the IPTV subscriber wants to watch. When choosing a program, the IPTV subscriber sends an authorization request to the IPTV application system. The IPTV application system sends the authorization of the PPV program after verifying the authorization to the subscriber. The media player in the subscriber terminal sends a VOD request according to the received Universal Resource Locator (URL) to the media server and receives a response.

However, in the solution to the VoD service, even if the IPTV subscriber has ordered the program and obtained the authorization to the program, the IPTV subscriber is still necessary to pass the authorization verification performed by the IPTV application system while demanding the program, which delays the response in the live broadcast PPV service, influences user experiences and greatly increases the cost of the IPTV application system.

A solution to the above-mentioned problems in the prior art provides a live broadcast PPV service adopting a CA management system. Figure 2 shows the structure of a management system designed for the live broadcast PPV service. The IPTV subscriber views an EPG page to search for and choose PPV programs that the IPTV subscriber wants to watch. The subscriber sends an authorization request to the IPTV application system when choosing a PPV program and the IPTV application system requests the CA management system to send an EMM of the PPV program after verifying the authorization to the subscriber. The CA management unit in the IPTV subscriber terminal parses the authorization information and manages the media player according to the rules given in the authorization information concerning the use of the live broadcast PPV program. However, the solution relies on the CA management system provided by a third party, which increases system cost, and brings difficulties to the system implementation. In addition, new services including time shift have emerged in the live TV broadcast service, while the authorization to time shift operation is not defined in the authorization information, and thus it is difficult to perform the management of the time shift operation while the subscriber watches PPV programs. That is another disadvantage of the solution.

The implementation of the present invention is further described in detail with reference to accompanying drawings and embodiments.

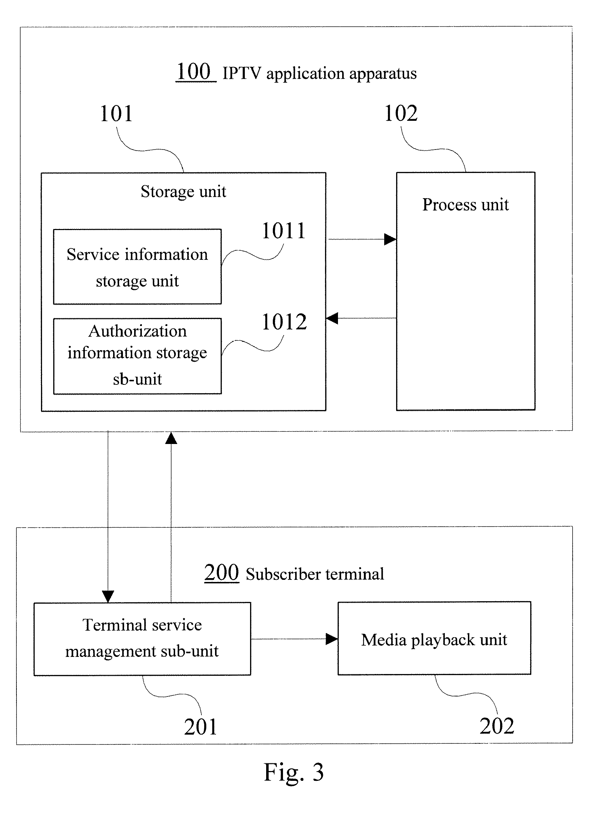

Figure 3 shows the structure of a system for managing an IPTV live broadcast service in accordance with an embodiment of the present invention, which includes IPTV application apparatus 100 and subscriber terminal 200.

IPTV application apparatus 100 includes storage unit 101 and process unit 102, and subscriber terminal 200 includes terminal service management unit 201 and media playback unit 202.

In IPTV application apparatus 100, storage unit 101 is used for storing service information and authorization information of a subscriber terminal, and further includes service information storage sub-unit 1011 and authorization information storage sub-unit 1012.

The service information stored in service information storage sub-unit 1011 includes: whether a channel supports a PPV service, whether a program on a PPV-supporting channel supports the PPV service, whether a PPV-supporting program supports PPV time shift, the valid period of time shift for a program that supports the PPV time shift, the valid period of authorization to a program and the invalid time of authorization to a program. The service information stored in service information storage sub-unit 1011 may be updated on demand. The update processing includes: setting a new channel and program, editing the valid period of authorization and the invalid time of authorization to a program, adding a PPV support identifier to a PPV-supporting channel or program, and adding a time shift-supporting identifier to a program supporting time shift operation.

Authorization information storage sub-unit 1012 is used for storing the authorization information of subscriber terminal 200 in real time. The authorization information includes: authorized channels obtained by the subscriber terminal, whether authorized programs support the PPV service, the start time and end time of authorized PPV programs, whether authorized PPV programs support time shift operation, the time interval for the time shift operation performed by the subscriber terminal and the valid period of the subscriber terminal being in the time shift state after the live broadcast of a PPV program ends on a channel.

In IPTV application apparatus 100, process unit 102 may be an EPG page, a call center or a subscriber management center. Process unit 102 is used for responding to service information inquiries, receiving requests from subscriber terminal 200, updating the authorization information of the subscriber terminal, and sending a new channel list to terminal service management unit 201 in subscriber terminal 200. The requests from subscriber terminal 200 may include: authorization requests for unauthorized channels or programs, and authorization cancellation requests for authorized channels or programs. When the process unit is an EPG page, the authorization may be issued before or during the broadcast of a program, and during the valid period of authorization to the program set by the system. When the process unit is a call center or subscriber management center, the authorization can only be issued before the broadcast of the program and during the valid period of authorization to the program. When the process unit is an EPG page, or a call center or a subscriber management center, the authorization may be cancelled before or during the broadcast of the program and before the invalid time of authorization to the program set by the system.

In subscriber terminal 200, terminal service management unit 201 is used for inquiring about the service information stored in service information storage sub-unit 1011 of IPTV application apparatus 100, sending requests to IPTV application apparatus 100 based on the service information, obtaining a channel list and authorization information, transmitting the authorization information to media playback unit 202 and thus using the live broadcast service. Subscriber Terminal 200 may obtain the authorization information from IPTV application apparatus 100 while entering a channel or program and needing the authorization information, alternatively, IPTV application apparatus 100 may send the authorization information in real time, while updating the channel list, to terminal service management unit 201 in subscriber terminal 200.

In subscriber terminal 200, media playback unit 202 employs the live broadcast service under the control of terminal service management unit 201, and terminal service management unit 201 also sends the management information for time shift operation to media playback unit 202. The employ of the live broadcast service includes the adding and deleting a live broadcast channel or live broadcast program, and the time shift operation. The time interval of the time shift operation performed by the subscriber terminal and the valid period of the subscriber terminal being in the time shift state after the live broadcast of a program ends on a channel are controlled by the management information for the time shift operation. The live broadcast service is obtained by using an EPG page, channel switch button or digit button.

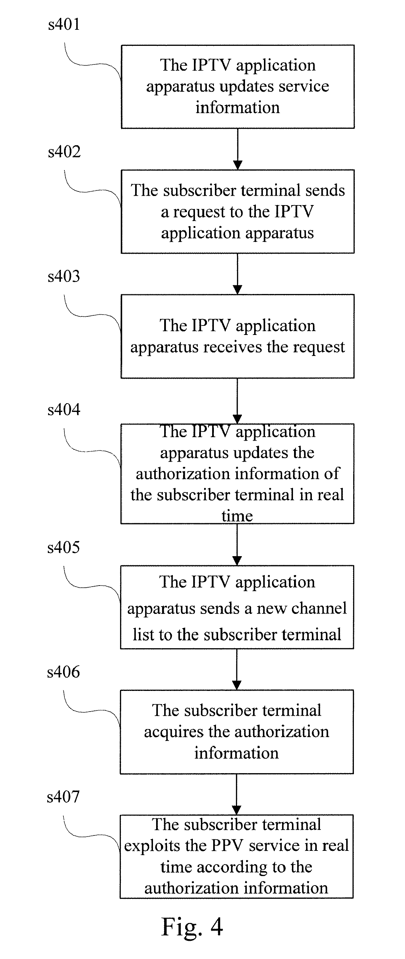

Figure 4 shows a method for managing an IPTV live broadcast service in accordance with an embodiment of the present invention, including the following steps.
s401: The IPTV application apparatus updates service information.
s402: The IPTV application apparatus receives a request from a subscriber terminal.

The request received by the IPTV application apparatus from the subscriber terminal includes: an authorization request for an unauthorized channel or program, or an authorization cancellation request for an authorized channel or program.

The subscriber terminal includes a Set-Top Box (STB) and a PC or handhold mobile terminal, and is able to view live broadcast channels, a program list and the authorization information of authorized channels and programs through an EPG page. The EPG page is generated by the IPTV application apparatus, identifiers on whether the live channels support the PPV service are attached to the live channels, and identifiers on whether the live programs support the PPV service or time shift operation are attached to the live programs listed in the program list of the EPG page.
s403: The IPTV application apparatus updates the authorization information of the subscriber terminal in real time.

The IPTV application apparatus updates the authorization information of the subscriber terminal in real time upon the receipt of the request from the subscriber terminal. The updating may be performed through the EPG page, call center or subscriber management center.

With regard to unauthorized channels or programs, the subscriber terminal may obtain the authorization to the channels or programs through the EPG page, call center or subscriber management center during the valid period of authorization to the channels or programs set by the system. For authorized channels or programs, the subscriber terminal may cancel the authorization to the channels or programs through the EPG page, call center or subscriber management center before the invalid time of authorization to the channels or programs set by the system.
s404: The IPTV application apparatus sends a new channel list to the subscriber terminal.
s405: The subscriber terminal obtains the authorization information.

The subscriber terminal may obtain the authorization information by two ways: the subscriber terminal may send a request and obtain the authorization information from the IPTV application apparatus upon the entrance of a channel or program; and the IPTV application apparatus may send the authorization information together with the new channel list to the subscriber terminal, so that the subscriber terminal only needs to obtain the authorization information from its cache.
s406: The subscriber terminal employs the PPV service in real time according to the authorization information.

After obtaining the authorization information, the subscriber terminal may employ the PPV service via the EPG page, channel switch button or digit button.

When the subscriber terminal attempts to access the PPV service via the EPG page, the IPTV application apparatus first verifies whether the subscriber terminal obtains the authorization to the channel or program, if the subscriber terminal obtains the authorization to the channel, the subscriber terminal enters the channel directly; if the subscriber terminal only obtains the authorization to the program, the IPTV application apparatus further checks whether the PPV program to which the subscriber obtains the authorization starts, if the PPV program starts, the IPTV application apparatus notifies the subscriber terminal to enter the channel of the PPV program, otherwise the IPTV application apparatus informs the subscriber terminal of the start time of the PPV program and exit the process. If the program does not support time shift, the subscriber terminal initiates a timer to instruct the media playback unit to exit the live broadcast channel after the broadcast of the program. If the program supports time shift, the IPTV application apparatus needs to trigger the subscriber terminal to manage the time interval of the time shift operation performed by the subscriber terminal, and initiates a timer after the broadcast of the program to control the time during which the subscriber terminal is allowed to stay in the PPV program. The control over the time interval of the time shift operation performed by the subscriber terminal includes: setting a maximum rewind time in the time shift operation performed by the subscriber terminal, the maximum rewind time may be extended along with the broadcast of the program until the end of program broadcast.

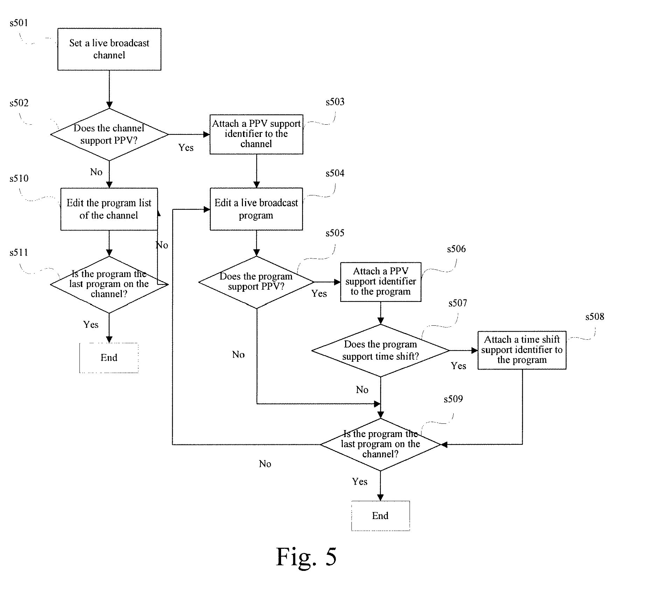

Figure 5 shows the process of the IPTV application apparatus updating the service information in s401, including the steps as follows.
s501: Set a live channel by the IPTV application apparatus.
s502: Verify whether the live channel supports the PPV service; if the live channel supports the PPV service, perform s503; otherwise, perform s510.
s503: Attach an identifier to the live channel to identify that the live channel supports the PPV service.
s504: Edit the programs in the program list of the live channel, set the valid period of authorization and the invalid time of authorization to the present program.
s505: Verify whether the present program supports the PPV service; if the program supports the PPV service, perform s506; otherwise, perform s509.
s506: Attach an identifier to the program to identify that the program supports the PPV service.
s507: Verify whether the PPV service of the program supports time shift; if the PPV service of the program supports time shift, perform s508; otherwise, perform s509.
s508: Attach an identifier to the program to identify that the program supports the PPV time shift.
s509: Verify whether the program is the last program on the channel; if the program is the last program, terminate the process; otherwise perform s504.
s510: Edit the programs in the program list of the channel.
s511: Verify whether the program is the last program on the channel; if the program is the last program, terminate the process; otherwise, perform s510.

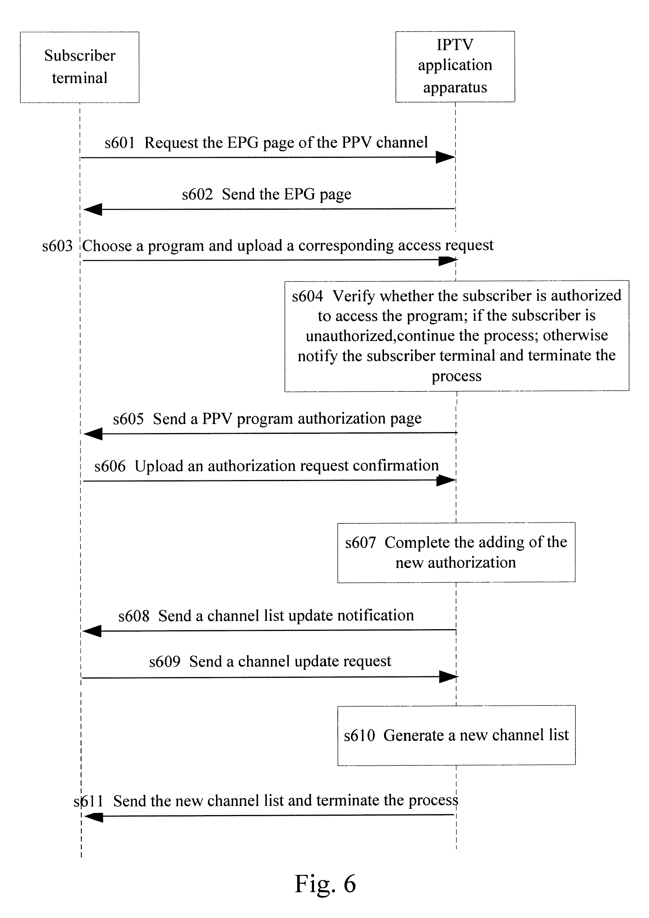

Figure 6 shows the process of updating the authorization information in s403, e.g., when the subscriber terminal sends an authorization request through the EPG page, including the steps as follows.
s601: The subscriber terminal requests the EPG page of the PPV channel from the IPTV application apparatus.
Step s602: The IPTV application apparatus returns the EPG page.
Step s603: The subscriber terminal chooses a program in the EPG page and uploading a request for the program.
s604: The IPTV application apparatus verifies whether the program is authorized to the subscriber terminal; if the program is unauthorized, perform s605; otherwise, notify the subscriber terminal that the program has been authorized and the process terminates.
s605: The IPTV application apparatus returns an adding PPV program authorization page to the subscriber terminal.
s606: The subscriber terminal uploads an authorization request confirmation to the IPTV application apparatus.
s607: The IPTV application apparatus authorizes the subscriber terminal to access the program.
s608: The IPTV application apparatus sends a channel list update notification.
s609: The subscriber terminal sends a channel update request.
s610: The IPTV application apparatus generates a new channel list including the new program.
s611: The IPTV application apparatus sends the channel list to the subscriber terminal and terminates the process.

The authorization cancellation process for authorized channels or programs is similar to the process shown in Figure 6, and thus will not be described herein.

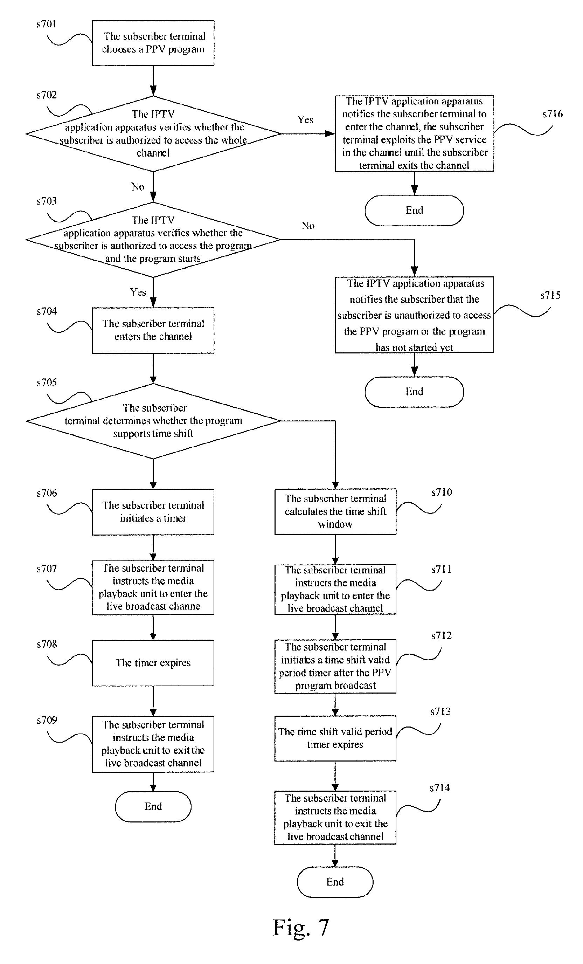

Figure 7 shows the process of the subscriber terminal employing the PPV service through the EPG page in s460, including the steps as follows.
s701: The subscriber terminal chooses a PPV program and uploads a request for the PPV program.
s702: The IPTV application apparatus verifies whether the subscriber terminal is authorized to access the whole channel; if the subscriber terminal is unauthorized, perform s703; otherwise, perform s716.
s703: The IPTV application apparatus verifies whether the subscriber terminal is authorized to access the program; if the subscriber terminal is authorized, perform s704; otherwise, perform s715.
s704: The IPTV application apparatus notifies the subscriber terminal to enter the channel.
s705: The subscriber terminal determines whether the program supports time shift according to the authorization information; if the program does not support time shift, perform s706; otherwise, perform s710.
s706: The subscriber terminal starts a timer.
s707: The subscriber terminal instructs the media playback unit to enter the live broadcast channel.
s708: The timer expires.
s709: The subscriber terminal instructs the media playback unit to exit the live broadcast channel and display the EPG page, and terminates the process.
s710: The subscriber terminal calculates the time shift window.
s711: The subscriber terminal updates the time shift window of the media playback unit, and instructs the media playback unit to enter the live broadcast channel.
s712: The subscriber terminal starts a time shift valid period timer after the PPV program broadcast.
s713: The time shift valid period timer expires.
s714: The subscriber terminal instructs the media playback unit to exit the live broadcast channel and display the EPG page, and the process terminates.
s715: The IPTV application apparatus notifies the subscriber terminal that the subscriber terminal is unauthorized to access the PPV program or the program has not started yet, and the process terminates.
s716: The IPTV application apparatus notifies the subscriber terminal to enter the channel, the subscriber terminal employs the PPV service in the channel until the subscriber terminal exits the channel and the process terminates.

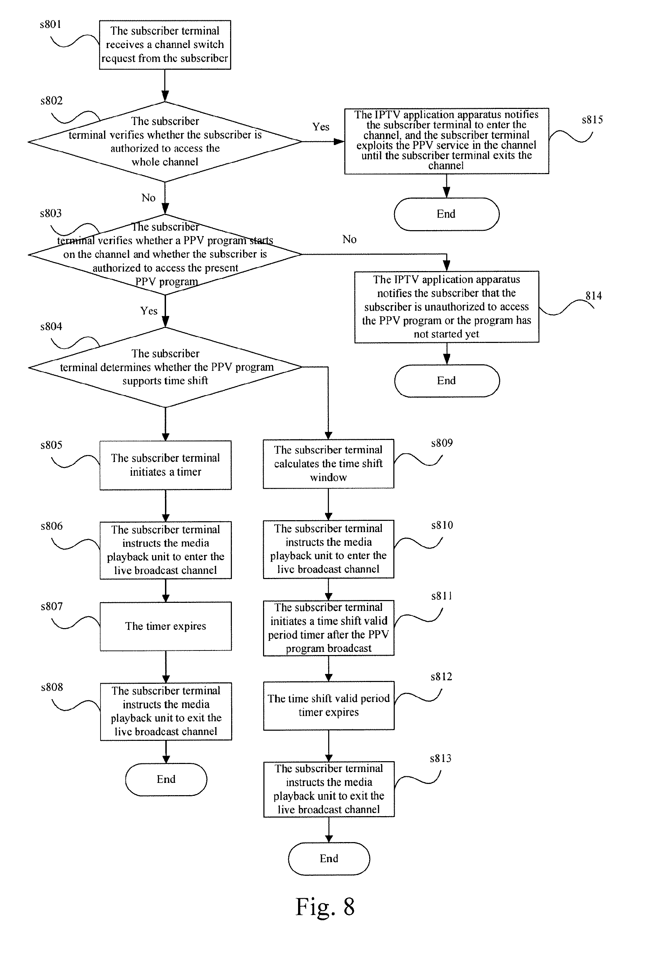

In s406, when the subscriber terminal employs the PPV service by switching channel with a digit button or up/down button, the process is similar to the process of the subscriber terminal employing the PPV service through the EPG page and shown in Figure 8, which includes the steps as follows.
s801: The subscriber terminal receives a channel switch request from the subscriber terminal.
s802: The subscriber terminal verifies whether the authorization to the whole channel is obtained; if the authorization is obtained, perform s803 otherwise; perform s815.
s803: The subscriber terminal verifies whether a PPV program starts on the channel and whether the subscriber is authorized to access the present PPV program; if the PPV program starts on the channel and the subscriber is authorized to access the present PPV program, perform s804; otherwise, perform s814.
s804: The subscriber terminal determines whether the PPV program supports time shift according to the channel list information; if the PPV program does not support time shift, perform s805; otherwise, perform s809.
s805: The subscriber terminal starts a timer.
s806: The subscriber terminal instructs the media playback unit to enter the live broadcast channel.
s807: The timer expires.
s808: The subscriber terminal instructs the media playback unit to exit the live broadcast channel and display the EPG page, and the process terminates.
s809: The subscriber terminal calculates the time shift window.
s810: The subscriber terminal updates the time shift window of the media playback unit and instructs the media playback unit to enter the live broadcast channel.
s811: The subscriber terminal starts a time shift valid period timer after the PPV program broadcast.
s812: The time shift valid period timer expires.
s813: The subscriber terminal instructs the media playback unit to exit the live broadcast channel and display the EPG page, and the process terminates.
s814: The IPTV application apparatus notifies the subscriber terminal that the subscriber terminal is unauthorized to access the PPV program or the program has not started yet, and the process terminates.
s815: The IPTV application apparatus notifies the subscriber terminal to enter the channel, and the subscriber terminal employs the PPV service in the channel until the subscriber terminal exits the channel, and the process terminates.

The foregoing is only some embodiments of the present invention. The protection scope of the present invention, however, is not limited to the above description. Any change or substitution that is within the scope disclosed by the present invention and can easily occur to those skilled in the art should be covered by the protection scope of the present invention.

## Claims

1. A method for managing an Internet Protocol TV, IPTV, live broadcast service, comprising:
receiving a request from a subscriber terminal;
updating authorization information of the subscriber terminal in real time;
generating a channel list for the subscriber terminal according to the authorization information; and
sending the channel list to the subscriber terminal.

2. The method of Claim 1, wherein
the receiving a request from a subscriber terminal comprises:
receiving an authorization request for an unauthorized channel or program from the subscriber terminal;
the updating authorization information of the subscriber terminal comprises:
granting an authorization to the subscriber terminal and updating the authorization information.

3. The method of Claim 1, wherein
the receiving a request from a subscriber terminal comprises:
receiving an authorization cancellation request for an authorized channel or program from the subscriber terminal;
the updating authorization information of the subscriber terminal comprises:
canceling an authorization to the subscriber terminal and updating the authorization information.

4. The method of Claim 1, wherein the updating authorization information of the subscriber terminal in real time comprises:
updating management information for performing time shift operation on a program or channel supporting time shift in the authorization information.

5. The method of Claim 4, wherein the management information for performing time shift operation comprises a time interval of the time shift operation and a valid period of the subscriber terminal being in a time shift state after the live broadcast of a PPV program ends on a channel.

6. The method of Claim 1, further comprising:
updating service information when receiving the request from the subscriber terminal.

7. The method of Claim 6, wherein the updating service information comprises:
attaching a time shift support identifier to a program supporting time shift operation.

8. The method of Claim 1, further comprising:
obtaining, by the subscriber terminal, the authorization information, and employing a live broadcast service according to the authorization information.

9. The method of Claim 8, wherein the obtaining the authorization information comprises:
obtaining the authorization information when the subscriber terminal enters a channel or program.

10. The method of Claim 8, wherein the obtaining the authorization information comprises:
obtaining the authorization information along with the channel list.

11. The method of Claim 8, wherein the employing a live broadcast service comprises:
adding an authorized channel and program into live broadcast; and
performing time shift operation on the authorized program if the authorized program supports time shift.

12. An Internet Protocol TV, IPTV, application apparatus, comprising:
a storage unit, capable of storing authorization information of a subscriber terminal; and
a process unit, capable of receiving a request from a subscriber terminal, updating the authorization information of the subscriber terminal in real time, generating a channel list for the subscriber terminal according to the authorization information, and sending the channel list to the subscriber terminal.

13. The IPTV application apparatus of Claim 12, wherein the storage unit comprises:
a service information storage sub-unit, capable of storing the service information; and
an authorization information storage sub-unit, capable of storing the authorization information of the subscriber terminal in real time.

14. The IPTV application apparatus of Claim 12 or claim 13, wherein the authorization information comprises management information for performing time shift operation on a program or channel supporting time shift.

15. The IPTV application apparatus of Claim 14, wherein the management information comprises a time interval of the time shift operation and a valid period of the subscriber terminal being in a time shift state on a channel after the live broadcast of a PPV program ends.

16. A subscriber terminal, comprising:
a terminal service management unit, capable of sending a request to an Internet Protocol TV, IPTV, application apparatus, obtaining authorization information and a channel list;
wherein the channel list is generated by the IPTV application apparatus according to the authorization information and is updated in real time;
a media playback unit, capable of employing a live broadcast service according to the authorization information received from the terminal service management unit.

17. The method of Claim 16, wherein the terminal service management unit obtains the authorization information when the subscriber terminal enters a channel or program.

18. The method of Claim 16, wherein the terminal service management unit obtains the authorization information along with the channel list.

19. The method of Claim 16, wherein the media playback unit adds an authorized channel and program into live broadcast, and performs time shift operation on the authorized program if the authorized program supports time shift.

20. A system for managing an Internet Protocol TV, IPTV, live broadcast service, comprising:
a subscriber terminal as claimed in any of claims 16 to 19;
an IPTV application apparatus as claimed in any of claims 12 to 15.
